# EUROPEAN PATENT APPLICATION

(11) **EP 2 783 739 A1**
(43) Date of publication of application: **01.10.2014**
(21) Application number: 13160831.7
(22) Date of filing: 25.03.2013
(51) Int. Cl.: B01D 46/24, B01D 53/26, B01D 46/00

(54) **An Air Drying Filter**

(71) Applicant: Asas Filtre Sanayi Ve Ticaret Anonim Sirketi, 31201 Hatay (TR)
(72) Inventor: Eren, Isam, 31201 HATAY (TR); Yilmaz, Vahit, 31201 HATAY (TR)
(74) Representative: Iskender, Ibrahim

(57) **Abstract**

The present invention is related to an air drying filter (1) separating firstly said air that will pass to the system from the air compressor, from the oil thanks to oil separating medium (11) and then, separating the clean air cleared of the oil, from the moisture thanks to chemicals (9) in order for the members included in the system into which said air will be transferred from the air compressor, not to interrupt their functioning.

## Description

### Technical Field

The present invention is related to an air drying filter separating the air from the moisture and oil therein in order for the components included in the system into which said air will be transferred from the air compressor, not to interrupt their functioning.

### Prior Art

The air driers are generally located between air sources such as compressor, and the air tanks. The air driers have moisture absorbing members. As moisture is contained in the air arriving to the system where the air is used, from the air source, some members functioning in the system to which the air will arrive may break down. Therefore, the drying member included in the air drier is required to be renewed periodically. Thus, drying material is provided in a cartridge that can be removed from the air drier. Said cartridge is replaced periodically due to decrease in the performance of drying material. In addition, oil droplets are contained in the air absorbed from the compressor. Said droplets occur due to lubrication performed in order to protect the compressor against the high temperature and friction. As the air containing said oil droplets and moisture therein penetrates into the air drier, it damages the structure of the air drying material included in the air drier and decreases the service life of said material. Therefore, the air penetrating into the air drier is required to be freed from the air therein.

An air drier is disclosed in the European patent document numbered EP1048541. Moist and oily air penetrates into the drier from the bottom and from here, enters into the cartridge including the drying material that will rise thereof by means of channels provided at both edges. The air dried here returns to the system in a dry and clean manner through the opening provided at the downstream . In addition, oil filtering members are provided in order to absorb the oil particles in said drier. Said members are provided at the top of the channels through which air rises in the drier. However, said air may be oiled until penetrating into the cartridge including the drying material after passing through said members. Therefore, a complete solution preventing the drying material from being oiled is not provided in the European patent document numbered EP1048541.

### Brief Description of the Invention:

The object of the present invention is to disclose an air drying filter where oil separation process is performed before the moisture holding process and thus, which enables the service life of the product to be increased by preventing the chemical used in the moisture holding process from being polluted due to the oil.

Another object of the present invention is to disclose an air drying filter where possible problems that will arise from the polluted air at the place where it arrives will be prevented thanks to separating the polluted oil from the air.

### Detailed Description of the Invention:

The air drying filter developed in order to achieve the objects of the invention is shown in the figure and said figure is as follows;

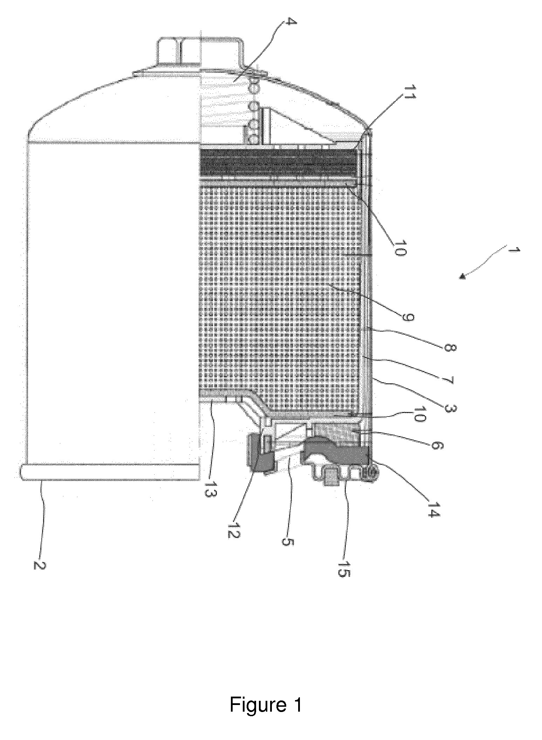

Figure 2 is the views of the air drying filter according to the present invention, half of which is from the front and the other half is cross sectional.

The parts in the figure are enumerated individually and said parts are described below.
1. Air drying filter
2. Cover
3. Shell
4. Compression member
5. Opening
6. Pre-filter
7. Case
8. Channel
9. Chemical
10. Material preventing the chemical exit
11. Oil separating medium
12. Outer sealing member
13. Clean air holding member
14. Vibration and impact damper and sealing member
15. Cover

The air drying filter (1) according to the present invention comprises;
- a cover (2) provided at the outmost layer and serving as protector,
- at least one shell (3) protecting the members included therein against the affects that may arise from the outer medium and increasing the resistance provided therein,
- at least one compression member (4) enabling the members to be compressed,
- opening (5) through which the air enters,
- at least one pre-filter (6) serving as pre-filter by separating the foreign substances included in the contaminated air entering through the openings (5),
- at least one case (7) where moisture and oil are separated by means of the members included therein,
- at least one channel (8) enabling the air entering inside and subjected to the pre-filtering process by the pre-filter (6), to be pushed towards the plastic case (7) in order to be separated from oil and moisture, and located between the shell (3) and the case (7),
- chemical (9) provided inside the case (7), enabling the moisture inside the air to be removed and the air to be dried thanks to chemical content therein, and performing main filtering process,
- at least one material preventing the chemical exit (10) preventing the chemicals (9) from going out of the case (7) from the inside of the case (7), and located at the inlets and outlets of the case (7),
- one oil **separating medium (11)** provided at the upstream of the case (7), and separating the oil from contaminated air by holding, before said air transferred from the compressor in the vehicle system, faces with moisture holder chemical (9) included in the filter case (7)

In the preferred embodiment of the air drying filter (1) according to the present invention, the cover (2) and the case (7) are made of plastic, while the other cover (15) is made of sheet. The compression member (4) is spring; the material preventing the chemical outlet (10) is fiber; sealing member (12) is gasket; clean air holding member (13) is o-ring; vibration and impact damper and sealing member (14) is outer gasket. The pre-filter (6) is the filtering member that has the porous structure so as to create pressure difference in the desired amount in the system.

The polluted air in the air drying filter (1) according to the present invention penetrates into the filter (1) through the openings (5) provided on the plastic cover (2). The polluted air entering into the filter (1) is firstly separated from the foreign substances therein by means of the pre-filter (6). Therefore, both the foreign substances contained in the air are prevented from damaging the filter (1) members and the filter (1) is prevented from being blocked and thus, the filter is made to have a longer service life. The polluted air separated from the foreign substances therein moves towards the inlet of the plastic case (7) through the channel (8) provided between the shell (3) and plastic case (7). The polluted air entering through the plastic case (7) is separated from oil particles therein by means of the oil separating medium (11) provided at the upstream of the plastic case (7). Thanks to said process, the moisture contained in the air is released and the oil is prevented from being mixed into the structure of the chemicals (9) that will separate the moisture. Therefore, the life of the chemicals (9) separating the moisture is increased. The air cleared of oil is finally separated from the moisture thanks to the chemicals (9) in the plastic case (7) and is discharged firstly from the inside of the plastic case (7) and then, from the filter (1) in a dry and clean manner, and is transferred to the system where the filter (1) functions.

In the filter (1) according to the present invention, at least one sealing member (12), i.e. the gasket, is provided on the plastic cover (2) in order to prevent the clean air separated from oil and moisture, and the polluted air entering into the filter (1) from being mixed with each other.

The filter (1) according to the present invention comprises at least one clean air holding member (13) that is selected as o-ring in order to provide sealing during the montage of the filter to the system, and to prevent the cleaned air from leaking out of the system where the filter is used.

Air drying filter (1) according to the present invention comprises at least one vibration and impact damper and sealing member (14) preventing the polluted air entering into the filter (1) from passing to the outer medium, damping the vibrations and impacts to which the filter (1) may be exposed, providing sealing and being preferably a gasket.

At least one sheet cover (15) which serves as bearing for said vibration impact damper and sealing member (14) and prevents the air from leaking out of the filter (1) thanks to its spiral structure, is provided in the air drying filter (1) according to the present invention.

Based on this main concept, the air drying filter (1) according to the present invention enables several applications to be developed and cannot be limited with the examples described here; it is as described in the claims.

## Claims

1. **An air drying filter (1) comprising;**
- **a cover (2)** provided at the outmost layer and serving as protector,
- at least one **shell (3)** protecting the members included therein against the affects that may arise from the outer medium and increasing the resistance provided therein,
- at least one **compression member (4)** enabling the members to be compressed,
- **opening (5)** through which the air enters,
- at least one **pre-filter (6)** serving as pre-filter by separating the foreign substances included in the contaminated air entering through the openings (5),
- at least one **case (7)** wherein moisture and oil are separated by means of the members included therein,
- at least one **channel (8)** enabling the air entering inside and subjected to the pre-filtering process by the pre-filter (6), to be pushed towards the case (7) in order to be separated from the oil and moisture, and located between the shell (3) and the case (7),
- **chemical (9)** provided inside the case (7), enabling the moisture inside the air to be removed and the air to be dried thanks to chemical content therein, and performing pre-filtering process, and
- **material preventing chemical outlet (10)** preventing the chemicals (9) from going out of the case (7) from the inside of the case (7), and located at the inlets and outlets of the case (7),
**and characterized in that** it comprises;
- one **oil separating medium (11)** provided at the upstream of the case (7), and separating the oil from contaminated air by holding, before said air transferred from the compressor in the vehicle system, faces with moisture holder chemical (9) included in the filter case (7)

2. The air drying filter (1) according to Claim 1, **characterized in that**;
- said cover (2) is made of plastic.

3. The air drying filter (1) according to Claim 1, **characterized in that**;
- said compression member (4) is spring.

4. The air drying filter (1) according to Claim 1, **characterized in that**;
- said case (7) is made of plastic.

5. The air drying filter (1) according to Claim 1, **characterized in that**;
- material preventing the chemical exit (10) is fiber.

6. The air drying filter (1) according to Claim 1, **characterized in that**;
- it comprises at least one sealing member (12) on the cover (2) in order to prevent the clean air separated from oil and moisture, and the polluted air entering into the filter (1) from being mixed with each other.

7. The air drying filter (1) according to Claim 6, **characterized in that**;
- said sealing member (12) is gasket.

8. The air drying filter (1) according to Claim 1, **characterized in that**;
- it comprises at least one clean air holding member (13) in order to provide sealing during the montage of the filter to the system, and to prevent the cleaned air from leaking out of the system where the filter is used.

9. The air drying filter (1) according to Claim 8, **characterized in that**;
- said clean air holding member (13) is o-ring.

10. The air drying filter (1) according to Claim 1, **characterized in that**;
- it comprises at least one vibration and impact damper and sealing member (14) preventing the polluted air entering into the filter (1) from passing to the outer medium, damping the vibrations and impacts to which the filter (1) may be exposed, and providing sealing.

11. The air drying filter (10) according to Claim 1, **characterized in that**;
- said vibration and impact damper and sealing member (14) is gasket.

12. The air drying filter (10) according to Claims 10 and 11, **characterized in that**;
- it comprises at least one cover (15) which serves as bearing for said vibration and impact damper and sealing member (14) and prevents the air from leaking out of the filter (1) thanks to its spiral structure.

13. The air drying filter (10) according to Claim 12, **characterized in that**;
- said cover (15) is made of sheet.
